# EUROPÄISCHE PATENTANMELDUNG

(11) **EP 1 605 628 A1**
(43) Veröffentlichungstag der Anmeldung: **14.12.2005**
(21) Anmeldenummer: 04013532.9
(22) Anmeldetag: 08.06.2004
(51) Int. Cl.: H04L 12/24

(54) **Aktivierbarerer Sicherheitsmechanismus**

(71) Anmelder: SIEMENS AKTIENGESELLSCHAFT, 80333 München (DE)
(72) Erfinder: Hartlage, Heribert, 81241 München (DE)

(57) **Zusammenfassung**

Applikationen OLM, ETM, NML, EM eines Operations Systems OS bzw. Netzelemente NE eines Kommunikationsnetzes KN werden mit einem deaktivierten Sicherheitsmechanismus SM hergestellt, der zu einem späteren Zeipunkt - insbesondere nach Abschluss einer kundenspezifischen Konfigurationen bei der Herstellung oder einer Inbetriebnahme beim Nutzer des Erzeugnisses - aktiviert wird. Es können damit beim Hersteller gesicherte Schritte entfallen werden, wenn sie nicht erforderlich sind.

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB ganannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Desweiteren werden die Funktionalitäten entsprechend des FCAPS Schemas, soweit möglich, in folgende Gruppen klassifiziert:
F = Fault
C = Configuration
A = Accounting
P = Performance
S = Security

Die Funktionen werden durch gegenständliche Erzeugnisse bewirkt, die beispielsweise als Netzelement (NE), Operations System (OS), Applikation, Terminal, Router, Switch, Datenbankserver oder Programm ausgebildet sein können, aber selbstverständlich nicht auf diese beschränkt sind.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentralisiert ist, während die NE in dem Netz dezentral auf eine Vielzahl von Standorten verteilt sind.

Zwischen NE und OS kann ein Data Communication Networks (DCN) zur Übermittlung von Informationen vorgesehen sein. Die Übermittlung folgt den Prinzipien des Transportdienstes, so wie er in den unteren Schichten des ISO/OSI Referenzmodells im internationalen Standard X.200 beschrieben ist.

Ein OS kann mehrere Programme - auch Applikationen oder Software genannt - umfassen. Die Programme können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezfische Teilmenge der Resourcen des Netzes modelliert, visualisiert und gesteuert wird.

Die Programme werden von Hardware (z.B. Prozessor, i/o Baugruppe) ausgeführt, die in den Einrichtungen vorgesehen ist. Diese Ausführung wird von Supportsoftware (z.B. Multitasking bzw. Multithreading Betriebssystem, Datenbanksystem, Windows System) unterstützt.

Die Security Funktionalität wird in den Erzeugnissen beispielsweise durch Sicherheitsmechanismen realisiert, bei denen der abgesicherte Zugang zu den Erzeugnissen zumeist über eine Benutzerkennung (userId) und ein Kennwort (password) und/oder über Vorlage eines Sicherheitszertifikats ermöglicht wird.

In zeitgemäßen Systemen sind alle in OS und NE vorhandenen Sicherheitsmechanismen im Grundzustand sofort wirksam. Zum erstmaligen Zugang zu den Erzeugnissen - z.B. in der Fabrik oder bei der Inbetriebnahme beim Kunden - ist bereits eine "default userId" und ein "default password" vorgesehen, ohne deren Eingabe kein Zugang möglich ist. Nach erstmaligen Zugang können von entsprechend privilegierten Benutzern der Erzeugnisse weitere userID's mit zugehörigen password's eingerichtet werden.

Nach dem bislang Ausgeführten wird klar, dass die Umsetzung der beschriebenen Architektur in konkrete Lösungen infolge der ausgeprägten Verteiltheit des Systems und der Vielzahl an unterschiedlichen Systemkomponenten und -anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Die Eingabe von userId und password ist zeitaufwändig. Der Zeitaufwand sind umso höher, je mehr Erzeugnisse mit einem Sicherheitsmechanismus versehenen sind. Sie werden zu einem relevanten Zeitposten, wenn darüber hinaus in vergleichsweise kurzer Zeit eine Vielzahl von abgesicherten Zugängen bewirkt wird.
- Die Zugangsdaten, "default userId" und "default password", werden für jedes Erzeugnis üblicherweise separat verwaltet. Somit können sich "default userId" und "default password" von Erzeugnis zu Erzeugnis unterschiedlich sein.
   Dies führt beispielsweise bei der Inbetriebnahme zu unerwünschten Verzögerungen, wenn userId und/oder password infolge der Unterschiede nicht bekannt sind und mühsam ermittelt werden müssen.
- Besonders ausgefeilte Sicherheitsmechanismen, wie der Einsatz von Zertifikaten, bedingen dann auch einen zusätzlichen logistischen und verwaltungstechnischen Aufwand, der mit einer effizienten Produktion, einer passgenauen kundenspezifischen Einstellung und einer problemlosen Inbetriebnahme beim Kunden im Widerspruch steht.
- Die Absicherung des Zugangs mit einem Sicherheitsmechanismus ist nicht immer erforderlich. So kann bei einem Erzeugnis auf einen Sicherheitsmechanismus verzichtet werden, wenn das Erzeugnis (noch) nicht in einem sicherheitsrelevanten Umfeld eingesetzt wird. Insbesondere ist in der Fabrik für die Installation von kundenspezifischen Einstellungen und/oder bei der Inbetriebnahme beim Kunden ein sicherer Zugang zu einem OS oder zu einem NE (d.h. mit Benutzung eines Sicherheitsmechanismus) nicht erforderlich.

Eine Lösung für diese erfindungsgemäß erkannte Problemsituation sowie vorteilhafte Ausgestaltungen dieser Lösung sind in den Patentansprüchen angegeben.

Mit dieser Lösung ist eine Vielzahl von Vorteilen verbunden, die in den Ausführungsbeispielen der Erfindung beschrieben werden.
- Wenn der Sicherheitsmechanismus zunächst deaktiviert ist, können kundenspezifische Konfigurationen in der Fabrik ohne die Beachtung von Sicherheitsmechanismen einfacher und effizienter geladen werden.
- Die Inbetriebnahme beim Kunden kann einfacher und effizienter durchgeführt werden, da bei gegebenenfalls mehrfachen Zugang zum System eben keine Angabe von Benutzerkennung und Kennwort notwendig ist.
- Der Betreiber kann das OS oder das NE bei Bedarf auch ohne Sicherheitsmechanismus betreiben.
- Werden alternative Sicherheitsmechanismen angeboten wie Zugangskontrolle durch Benutzerkennung und Kennwort oder Zugangskontrolle mittels Sicherheitszertifikaten basierend auf einer Smartcard, kann wahlweise den Anforderungen des Betreibers entsprechend nur einer der beiden Sicherheitsmechanismen oder beide unwiderruflich aktiviert werden.
- Für Hersteller ergibt sich der schöne Vorteil, dass bei mehreren, unterschiedlichen Sicherheitsmechanismen jeder Sicherheitsmechanismus separat vermarktet werden kann.
- Die gesamte Software einschließlich der Teile, die den Zugang mit Benutzerkennung und Kennwert erfordern oder alternativ auch nicht erfordern, ist bereits auf dem OS oder dem NE vorhanden und muss nicht nachinstalliert werden. Der zunächst nicht wirksame Sicherheitsmechanismus, wie die Angabe von Benutzerkennung und Kennwort, ist bereits integriert allerdings noch nicht aktiviert. Somit kann der Sicherheitsmechanismus bei einem als Programm ausgebildeten Erzeugnis ohne erneute Übersetzung des Programms aktiviert werden, indem er beispielsweise durch entsprechende Lizenzschlüssel gezielt freigeschaltet wird.
- Mit dem Abschluss der Inbetriebnahme beim Kunden kann der Sicherheitsmechanismus mittels eines speziellen Kommandos aktiviert werden. Ist dieser erst einmal aktiviert, kann dieser nicht mehr deaktiviert werden. Mit der Aktivierung des Sicherheitsmechanismus muss dann z.B. immer die Benutzerkennung und das Kennwort dem OS oder dem NE vorgelegt werden, damit das System einem Benutzer Zugang gewähren darf. Damit wird sichergestellt, dass ein einmal aktivierter Sicherheitsmechanismus nicht mehr deaktiviert werden kann.
- Indem mit der Aktivierung ausgewählte Speicherplätze so verändert werden, dass zunächst Informationen über die Nutzung der Sicherheitsmechanismen abgelegt werden und anschließend auf diese Speicherplätze nur noch lesend zugegriffen werden kann, wird sichergestellt, dass eine Umgehung des aktivierten Sicherheitsmechanismus nicht möglich ist, selbst dann nicht, wenn die Software von dem OS oder die Software auf dem NE erneut gestartet ("gebootet") wird. Dies gilt auch, wenn Teile der Software oder die gesamte Software neu auf dem System installiert werden und dann ein Neustart erfolgt. Derselbe Vorteil tritt ein, wenn zusätzlich oder alternativ Teile der Software, die bisher den Zugang ohne die Angabe von Benutzerkennung und Kennwort zugelassen haben, durch solche Teilsoftware ersetzt werden, die nun die Angabe verlangen. Dies wird z.B. durch versteckte Dateien oder ersetzte Bausteine der Software (z.B. eine DLL) bewirkt. Zudem können mit der Aktivierung des Sicherheitsmechanismus die Softwareanteile, die eben nicht Benutzerkennung und Kennwort erfordern, gelöscht werden.
- Für einen Netzbetreiber ergeben sich durch Reduktion der OPEX (OPerational EXpenses) wirtschaftliche Vorteile.
- Eine Umsetzung der Erfindung erfordert keine prinzipiellen Änderungen des bisherigen Standes der Technik, sondern lässt sich nachträglich als Baustein - insbesondere als modifiziertes oder zusätzliches Computerprogrammprodukt - einfügen. Der Zeitpunkt der Realisierung kann unabhängig von anderen Funktionen gewählt werden.

Die Erfindung wird im Folgenden anhand von weiteren Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigt:

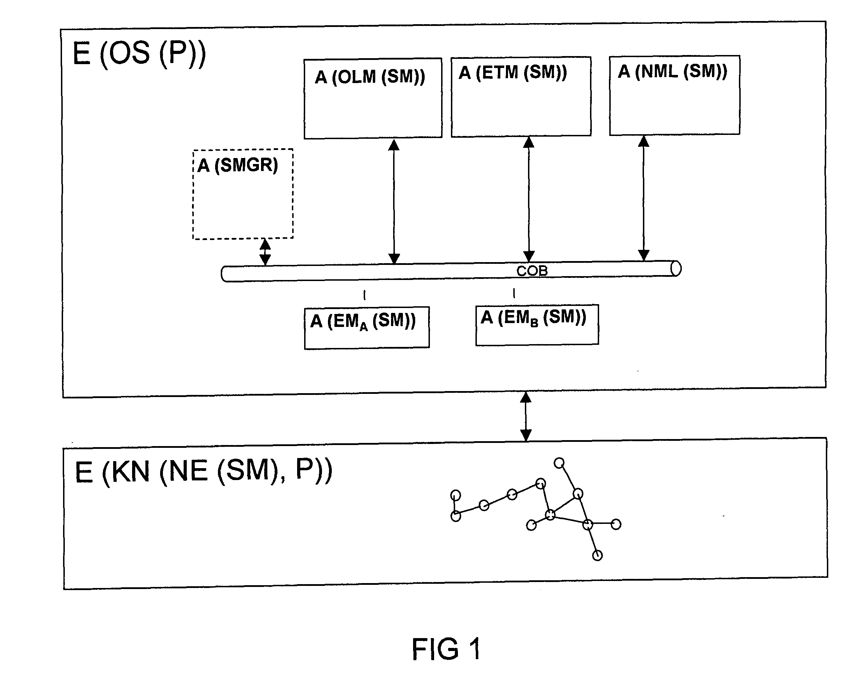

- Figur 1: eine beispielhafte Anordnung, umfassend ein zentrales Operations System OS mit Applikationen A zur Steuerung von dezentralen Elementen NE eines Kommunikationsnetzes KN und eine optionale Applikation Security Manager SMGR

Die Ausführungsbeispiele werden anhand der in Figur 1 dargestellten Anordnung erklärt, die eine Vielzahl von verteilt angeordneten gegenständlichen Erzeugnissen E umfasst. Die Erzeugnisse E sind beispielsweise als dezentral verteilt angeordnete Netzelemente NE eines Kommunikationsnetzes KN oder als zentrales Operations System OS mit Applikationen A zur Steuerung der dezentralen Elementen NE des Kommunikationsnetzes KN ausgebildet. Die Applikationen A sind beispielsweise als Management Applikationen Optical Link Manager OML, Network Management Layer NML, Ethernet Manager ETM oder Element Manager EM_{A}, EM_{B} sowie als optionaler Security Manager SMGR ausgebildet. Den als Applikationen A ausgebildeten Erzeugnissen können die TMN Funktionsblöcke Operations Systems Function (OSF) und Workstation Function (WSF), den als Netzelemente NE ausgebildeten Erzeugnissen der TMN Funktionsblock Network Element Function (NEF) zugeordnet sein. Die Applikationen A sind untereinander durch ein Datennetz COB verbunden. Das Operations System OS und die Netzelemente NE sind durch ein in der Fachwelt als Data Communication Network (DCN) bezeichnetes Datennetz verbunden. Die Erzeugnisse umfassen Hardware - insbesondere Prozessoren und Speichermittel -, mit deren Hilfe insbesondere diejenigen Erzeugnisse E durchgeführt werden, die als Computerprogrammprodukt P bzw. als Programm P ausbildet sind. Die Hardware kann auch unmittbar den Erzeugnissen E entsprechen, beispielsweise als Application Specific Integrated Circuit (ASIC) oder ein gleichwertiges gegenständliches Erzeugnis E.

Den als Management Applikation OML, NML, ETM, EM bzw. als Netzelement NE ausgebildeten Erzeugnissen E ist jeweils ein Sicherheitsmechanismus SM zugeordnet, weil diese Erzeugnisse E nicht von beliebigen Personen uneingeschränkt gesteuert werden dürfen. Diese Einschränkung bezieht sich nach Erkenntnis der Erfindung jedoch vor allem auf den operativen Betrieb dieser Erzeugnisse, jedoch nicht im selben Ausmaß auf deren Herstellung, Vorabkonfiguration und Inbetriebnahme. Während dieser Phasen kann nach Erkenntnis der Erfindung auf einen Sicherheitsmechanismus SM verzichtet werden.

Erfindungsgemäß werden diese Erzeugnisse E deshalb mit einem deaktivierten Sicherheitsmechanismus SM hergestellt, der erst zu einem späteren Zeitpunkt aktiviert wird. Vorzugsweise wird der Sicherheitsmechanismus SM nach Abschluss einer kundenspezifischen Konfigurationen bei der Herstellung oder einer Inbetriebnahme beim Nutzer des Erzeugnisses aktiviert.

Der Sicherheitsmechanismus SM wird bei der Herstellung vorzugsweise so in die Erzeugnisse E integriert, dass bei der Aktivierung keine nachträgliche Integration - insbesondere Nachinstallation - des Sicherheitsmechanismus SM erforderlich ist. Damit ist der schöne Vorteil verbunden, dass die Aktivierung alleinig mit Hilfe von zumindest einem Lizenzschlüssel und/oder einem Aktivierungskommando bewirkt werden kann. Die Integration kann auch einem Verweis auf einen Security Manager SMGR umfassen. In diesem Fall ist der Security Manager SMGR so zu konfigurieren, dass er zunächst einen deaktivierten Sicherheitsmechanismus für das soeben hergestellte Erzeugnis E aufweist. Dies kann beispielsweise dadurch bewirkt werden, dass in dem Security Manager SMGR alle nicht aktivierten Sicherheitsmechanismus SM per Voreinstellung immer deaktiviert sind.

Die wahlweise Aktivierung wird je nach Ausbildung des Erzeugnisses E bewirkt. Beispielsweise kann in einem ASIC ein spezieller Speicherplatz vorgesehen werden, dessen jeweiliger Wert den Aktivierungszustand anzeigt. Oder es kann eine spezielle Datei vorgesehen werden, die für einen aktivierten Sicherheitsmechanismus SM repräsentativ ist, wenn sie vorhanden ist und umgekehrt. Alternativ kann bei einem als Programm P ausgebildeten Erzeugnis eine spezielle Dynamic Link Library (DLL) ausgetauscht werden, wobei eine erste DLL einen deaktivierten und eine zweite DLL eine aktivierten Sicherheitsmechanismus SM enthält.

Schließlich kann der Sicherheitsmechanismus SM auf eine spezielle Applikation Security Manager SMGR ausgelagert werden. Die zugeordneten Erzeugnisse E enthalten dann einen Verweis auf den Security Manager, der bei Hochlauf der Erzeugnisse E vorzugsweise zwingend durchlaufen wird. Der Verweis führt beispielsweise zu einer Anfrage an den Security Manager SMGR, ob der Sicherheitsmechanismus zur Zeit aktiviert oder deaktiviert ist. In Abhängigkeit von der Antwort wird eine Sicherheitsprüfung durchgeführt oder nicht.

Gemäß einer Variante der Erfindung wird die Aktivierung so bewirkt, dass eine anschließende Deaktivierung eines einmal aktivierten Sicherheitsmechanismus SM ausgeschlossen ist. Beispielsweise kann dazu in dem ASIC der spezielle Speicherplatz so ausgestaltet sein, dass er bei der Herstellung zunächst für einen deaktivierten Sicherheitsmechanismus SM repräsentativ ist und im Anschluss genau einmal verändert werden kann und dann für einen dauerhaft aktivierten Sicherheitsmechanismsus SM repräsentativ ist, weil er nur noch lesend zugegriffen, aber nicht mehr verändert werden kann. Alternativ kann die spezielle Datei als versteckte Datei angelegt werden, die für einen Standardanwender des Systems nicht sichtbar oder nicht auffindbar ist, weil sie an einer unerwarteten Stelle gespeichert wird. Weiterhin kann bei einem als Programm P ausgebildeten Erzeugnis nach dem Austausch der DLL's die erste DLL, die den deaktivierten Sicherheitsmechanismus SM enthält, gelöscht werden. Schließlich könnte der Security Manager SMGR so realisiert sein, dass eine Deaktivierung eines einmal aktivierten Sicherheitsmechanismus SM nicht vorgesehen ist.

Der Sicherheitsmechanismus SM kann mehrfach vorgesehen sein. Er ist beispielsweise als Benutzerkennung (userId) mit Kennwort (password) oder als Sicherheitszertifikat basierend auf einer Smartcard ausgebildet. Erfindungsgemäß kann in diesem Fall jede Ausbildung wahlfrei individuell aktiviert werden. Auch der Verbot der anschließenden Deaktivierung kann wahlfrei auf individueller Basis, d.h. pro Sicherheitsmechanismus SM, eingestellt werden.

Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass alle Erzeugnisse teilweise oder vollständig in Software / Computerprogrammprodukten und/oder über mehrere physikalische Einrichtungen verteilt realisiert werden können.

## Patentansprüche

1. Verfahren zur Sicherung des Zugangs zu einem Erzeugnis (E), insbesondere einer als Programm (P) ausgebildeten Applikation (A) eines Operations Systems (OS) oder einem Netzelement (NE) eines Kommunikationsnetzes (KN), mit
- zumindest einem dem Erzeugnis zugeordneten, aktivierbaren Sicherheitsmechanismus (SM),
mit folgenden Schritten:
- Herstellung des Erzeugnisses mit einem deaktivierten Sicherheitsmechanismus,
- Aktivierung des Sicherheitsmechanismus zu einem späteren Zeitpunkt.

2. Verfahren nach dem vorstehenden Anspruch,
bei dem der Sicherheitsmechanismus nach Abschluss einer kundenspezifischen Konfigurationen bei der Herstellung oder einer Inbetriebnahme beim Nutzer des Erzeugnisses aktiviert wird.

3. Verfahren nach einem der vorstehenden Ansprüche,
bei dem für den Fall, dass mehrere Sicherheitsmechanismen vorgesehen sind, diese wahlfrei individuell aktiviert werden.

4. Verfahren nach einem der vorstehenden Ansprüche,
bei dem der Sicherheitsmechanismus bei der Herstellung so in das Erzeugnis integriert wird, dass bei der Aktivierung keine nachträgliche Integration - insbesondere Nachinstallation - des Sicherheitsmechanismus erforderlich ist.

5. Verfahren nach einem der vorstehenden Ansprüche,
bei dem der Sicherheitsmechanismus mit Hilfe von zumindest einem Lizenzschlüssel und/oder einem Aktivierungskommando aktiviert wird.

6. Verfahren nach einem der vorstehenden Ansprüche,
bei dem das Erzeugnis mit einer Wirkverbindung zu einem dem Erzeugnis zugeordneten Security Manager (SMGR), der den Sicherheitsmechanismus umfasst, hergestellt wird.

7. Verfahren nach einem der vorstehenden Ansprüche,
bei dem eine Deaktivierung eines einmal aktivierten Sicherheitsmechanismus ausgeschlosen ist.

8. Verfahren nach dem vorstehenden Anspruch,
bei dem der Ausschluss der Deaktivierung durch zumindest eine der folgenden Maßnahmen unterstützt wird:
- Veränderung von Speicherplätzen so, dass nach der Aktivierung nur noch lesend zugegriffen werden kann,
- Anlegen von zumindest einer versteckten Datei und/oder einem Dateieintrag,
- Ersetzen eines Bausteins des Erzeugnisses - insbesondere einer Dynamic Link Library,
- Löschen des deaktivierten Sicherheitsmechanismus - insbesondere der Software ohne Sicherheitsmechanismus.

9. Erzeugnis (E) - insbesondere Applikation (A) eines Operations Systems (OS) oder Netzelement (NE) eines Kommunikationsnetzes (KN) -, umfassend Mittel, die zur Durchführung der Schritte eines Verfahrens nach einem der vorstehenden Verfahrensansprüche eingerichtet sind.

10. Erzeugnis (E) - insbesondere Security Manager (SMGR) -, umfassend
- Mittel, die zur Durchführung derjenigen Schritte eines Verfahrens nach einem der vorstehenden Verfahrensansprüche die von dem Erzeugnis bewirkt werden, speziell eingerichtet sind,
- Mittel, die zur Durchführung von gemäß dem Verfahren vorgeschriebenen Wechselwirkungen des Erzeugnisses mit weiteren Erzeugnissen - insbesondere Management Applikationen (OLM, ETM, NML, EM) eines Operations Systems (OS) oder Netzelementen (NE) eines Kommunikationsnetzes (KN) -, von denen die restlichen Schritte des Verfahrens durchgeführt werden, eingerichtet sind.

11. Erzeugnis nach einem der beiden vorstehenden Ansprüche, ausgebildet als Computerprogrammprodukt (P), dessen Programmcode zur Durchführung des Verfahrens von zumindest einem Prozessor ausgeführt wird.
